# EUROPÄISCHE PATENTSCHRIFT

(11) **EP 1 324 961 B1**
(45) Veröffentlichungstag und Bekanntmachung des Hinweises auf die Patenterteilung: **02.05.2012**
(21) Anmeldenummer: 01972063.0
(22) Anmeldetag: 14.09.2001
(51) Int. Cl.: C04B 35/589

(54) **SILICIUM-BOR-KOHLENSTOFF-STICKSTOFF-KERAMIKEN UND VORLÄUFERVERBINDUNGEN, VERFAHREN ZU DEREN HERSTELLUNG SOWIE DEREN VERWENDUNG**
SILICON-BORON-CARBON-NITROGEN CERAMICS AND PRECURSOR COMPOUNDS, METHODS FOR THE PRODUCTION AND USE THEREOF
CERAMIQUES A BASE DE SILICIUM, BORE, CARBONE, AZOTE ET COMPOSES PRECURSEURS, PROCEDES DE PRODUCTION ET UTILISATION DE CES CERAMIQUES

(30) Priorität: 14.09.2000 DE 10045428
(43) Veröffentlichungstag der Anmeldung: 09.07.2003
(73) Patentinhaber: Max-Planck-Gesellschaft zur Förderung der Wissenschaften e.V., 80539 München (DE)
(72) Erfinder: KROSCHEL, Matthias, 53227 Bonn (DE); JANSEN, Martin, 71229 Leonberg (DE)
(74) Vertreter: Dey, Michael
(86) Internationale Anmeldenummer: PCT/EP2001/010669
(87) Internationale Veröffentlichungsnummer: WO 2002/022522

(56) Entgegenhaltungen:
- WO-A-98/10118
- DE-A- 4 107 108
- DE-A- 19 817 680

## Beschreibung

Die vorliegende Erfindung betrifft neue Verfahren zur Herstellung von Borylsilylaminen, neue Borsilylamine, neue Borosilazanverbindungen, neue Oligo- oder Polyborosilazanverbindungen, die das Strukturmerkmal Si - N - B aufweisen, keramisches Material und Verfahren zur jeweiligen Herstellung und Verwendung.

Das Verfahren, multinäre nicht-oxidische Keramiken aus molekularen Vorläufern herzustellen, gewinnt zunehmend an Bedeutung. Auf diese Weise werden Materialien zugänglich, die durch herkömmliche Synthesewege überhaupt nicht herzustellen waren. Die Hauptvorteile beim Ausgehen von molekularen Vorläufern sind die hohe Reinheit der Endprodukte und die Möglichkeit, keramische Fasern zu erhalten, da als Zwischenstufe ein schmelzbares Polymer erhalten werden kann. Für eine optimale Verspinnbarkeit ist es von entscheidender Bedeutung, dass die Makromoleküle des Polymers weitestgehend linear vorliegenden.

Bereits seit 1975 wird der Syntheseweg über molekulare Vorkäufer genutzt, um Siliciumcarbid-Fasern herzustellen (JP 75 50,223). Über die Synthese nitridischer Keramiken aus flüssigen Silazanpolymeren, die aus Ammoniak und Dichlorsilan erhältlich sind, wurde 1983 berichtet (D. Seyferth, G. H. Wiseman, C. Prud'homme, J. Am. Ceram. Soc. 66 (1983) ' C13). Seit 1984 ist auch die Dehydrohalogenierung mit Methylamin Stand der Technik (D. Seyferth, G. H. Wiseman, Polym. Prepr. 25 (1984) 101. Demnach ist aus Dichlorsilan und Methylamin ein Polymer erhältlich, das beim Erhitzen in eine schwarze Keramik umgewandelt wird. Dies lässt sich auf zahlreiche andere Halogenverbindungen übertragen. Besonders interessante Eigenschaften haben auf diese Weise hergestellte Keramiken aus Si, B, N und C. Die außergewöhnliche Hochtemperatur- und Oxidationsbeständigkeit, die eine solche Keramik aufweisen kann, ist der von allen auf andere Weise hergestellten Keramiken deutlich überlegen. DE 41 07 108 beschreibt die Synthese der Keramik SiBN₃C durch Vernetzung eines Einkomponentenvorläufers und anschließende thermische Zersetzung. Das dabei verwendete Vorläufermolekül Trichlorsilylaminodichlorboran (TADB, Cl₃Si - NH - BCl₂) wird mit Methylamin vernetzt, wobei zunächst alle fünf Chlor-Atome unter Dehydrohalogenierung durch Methylaminogruppen ersetzt werden. Zusammen mit der NH-Funktion verfügt die Baueinheit durch anschließende Kondensationsreaktionen im Polymer damit über sechs Verbrückungsmöglichkeiten zu den benachbarten Baueinheiten. Auf diese Weise wird ein stark quervernetztes Polymer erhalten. Die optimalerweise gewünschte Linearität des Polymers ist somit bei der Vorgehensweise gemäß DE 41 07 108 nicht gegeben und das Verspinnen bereitet Probleme.

Ein weiterer Nachteil der bisher verwendeten Vorläuferverbindung TADB ist die aufwendige Handhabbarkeit und die eingeschränkte Lagerfägigkeit. Es handelt sich selbst unterhalb von -20 °C um eine hochreaktive aggressive rauchende Flüssigkeit, die bei längerer Lagerung unter Zersetzung kontinuierlich Trichlorboran und Salzsäure abgibt.

Es wurde versucht, einzelne reaktive Positionen in den Vorläufermolekülen und damit einzelne Verbrückungsmöglichkeiten zu blockieren. Bei der Silazanspaltung (analog zur Synthese von TADB) ergeben sich dabei aber Probleme. Bereits bei Einführung einer Methylgruppe am Stickstoff erhält man ein unbrauchbares Produktgemisch, dessen weitere Auftrennung nicht gelingt (K. Barlos, H. Nöth, Chem. Ber. 110 (1977) 2790). Ungeachtet des synthetischen Misserfolges - der durch eigene Arbeiten bestätigt werden kann - wurde der Substanz eine CAS-Nummer zugewiesen [64355 - 89 - 1]. Weitere Publikationen zu dieser Verbindung gibt es bis heute nicht.

Wannagat et al. (Mh. Chem., Band 96 (1965), 1895-1901) beschreibt die Selbstkondensation von Alkylaminodimethylchlorsilanen. Die Autoren beschreiben die Umsetzung von flüssigem Methylamin mit einer Lösung von Dichlordimethylsilan in Petroläther, wobei Pentamethyldichlordisilazan und Nonamethylcyclotrisilazan gebildet werden.

DE 196 28 448 beschreibt, dass durch Verwendung von Vernetzungsreagenzien, die über die allgemein üblichen Substanzen Ammoniak und Methylamin hinausgehen, das C:N-Verhältnis in der Keramik variiert werden kann. Hierbei können jedoch keine spinnbaren Polymere erhalten werden. Der Silicium-Gehalt kann gemäß DE 43 44 161 durch Ammonolyse einer Mischung aus TADB und verschiedenen Chlorsilanen erhöht werden. Ein Erhöhung des Bor-Gehaltes ist gemäß DE 195 30 390 möglich, indem das Polymer mit Boran-Verbindungen behandelt wird. Aminiertes TADB kann gemäß DE 196 35 848 für keramische Beschichtungen im CVD-Verfahren eingesetzt werden.

Es wurde weiterhin gezeigt, dass eine maximal homogene Elementverteilung nur erreicht werden kann, wenn ein Polyborosilazan aus metallorganischen Vorläufermolekülen hergestellt wurde, die bereits Silicium und Bor enthalten (H.-P. Baldus, M. Jansen, Angew. Chem. 109 (1997) 339).

Eine Aufgabe der vorliegenden Erfindung ist deshalb die Bereitsstellung neuartiger, einfach und in großen Ausbeuten darstellbarer, metallorganischer Vorläuferverbindungen, die zu niedriger vernetzten Polymeren führen und einfacher zu handhaben sind als im Stand der Technik bekannte Vorläuferverbindungen. Gleichzeitig soll eine vollständig homogene Verteilung der beteiligten Elemente in der Keramik gewährleistet werden.

Eine weitere Aufgabe der Erfindung ist es, ein verbessertes Verfahren zu Herstellung solcher oder ähnlicher Verbindungen bereitzustellen.

Diese Aufgabe wird erfindungsgemäß gelöst durch ein Verfahren zur Herstellung von Verbindungen der Formel (I),

RₓHal₃₋ₓSi-NR¹-BR_{y}Hal_{2-y} (I)

wobei Hal jeweils unabhängig Cl, Br oder **I** bedeutet, R jeweils unabhängig einen Kohlenwasserstoffrest mit 1 bis 20 C-Atomen, vorzugsweise 1 bis 10 C-Atomen oder Wasserstoff darstellt, R¹ einen Kohlenwasserstoffrest mit 1 bis 20 C-Atomen, vorzugsweise 1 bis 10 C-Atomen darstellt, x 0, 1 oder 2 ist und y 0 oder 1 ist.

Bei dem erfindungsgemäßen Verfahren werden die Verbindungen gemäß Formel (1) hergestellt, indem eine Amin-Komponente R¹NH₂ nacheinander mit einer Silankomponente SiHal₄₋ₓRₓ und einer Boran-Komponente BHal_{3-y}R_{y} umgesetzt wird. In einem ersten Schritt wird die Silankomponente in der Gasphase mit der Amin-Komponente umgesetzt.

Bevorzugt wird im ersten Schritt die Silankomponente in der Gasphase mit der Amin-Komponente kontinuierlich oder in Portionen, mit oder ohne Trägergas, umgesetzt. Das gebildete Zwischenprodukt wird wiederum bevorzugt im zweiten Schritt mit der Boran-Komponente in kondensierter Phase, in einem inerten Lösungsmittel oder in Gasphase weiter umgesetzt.

Es ist auch möglich, die Dehydrohalogenierungsschritte mit der Hilfsbase zu unterstützen.

Auf diesem völlig neuen Reaktionsweg konnte unter anderem die Verbindung Dichlorboryl-methyl-trichlorsilyl-amin Cl₃Si-N(CH₃)-BCl₂ erstmals in reiner Form hergestellt werden. Dabei werden zunächst Tetrachlorsilan und Methylamin in der Gasphase zur Reaktion gebracht. Als Zwischenprodukt entsteht Methyl-trichlorsilylamin, welches in kondensierter Form oder vorzugsweise in der Gasphase mit Trichlorboran umgesetzt wird. Durch Vernetzung mit einem Amin wird ein polymeres Borosilazan erhalten, das einen geringeren Verzweigungsgrad und somit eine niedrigere Viskosität aufweist. Der Schmelzpunkt des Einkomponentenvorläufers liegt bei 10 °C. Damit ist bei Raumtemperatur eine problemlose Verarbeitung als Flüssigkeit möglich. Bei Lagerung (z. B. in einem herkömmlichen Kühlschrank) ist die Substanz dagegen fest und kann gefahrlos und ohne Zersetzung praktisch unbegrenzt gelagert werden. Auch für den Transport der Substanz ist der günstige Schmelzpunkt von großem Vorteil.

Zahlreiche Variationen bezüglich der Reaktionszeiten, -temperaturen und -führung sind möglich.

Auf analogem Reaktionsweg lassen sich durch Verwendung andere Amine am Stickstoff außer Methyl-Gruppen auch andere Gruppen anbringen. Durch Verwendung von Trichlorsilan, Dichlorsilan oder Alkylhalogensilanen (vorzugsweise Methylchlorsilane) an Stelle von Tetrachlorsilan bzw. Alkylhalogenboranen (vorzugsweise Methylchlorborane) an Stelle von Trichlorboran sind alternativ oder zusätzlich auch die anderen Verbrückungspositionen durch Alkyl-Gruppen und blockierbar bzw. als SiH- oder BH-Funktion der Verbrückung entzogen.

Bei den erfindungsgemäß hergestellten Verbindungen handelt es sich um Borsilylamine, welche 0,1 oder 2 an das Siliciumatom gebundene Kohlenwasserstoffreste aufweisen. Solche Verbindungen weisen das Strukturmerkmal Si-N-B auf. Für x = 1 oder 2 und/oder y = 1 enthalten diese Verbindungen Kohlenstoff bereits im Grundgerüst. Mit solchen Verbindungen können Keramiken hergestellt werden, die aufgrund des erhöhten Kohlenstoffgehalts und der Realisation neuer Strukturmerkmale, wie Si-C- oder B-C-Bindungen eine verbesserte mechanische und thermische Belastbarkeit aufweisen. Die Substitution von Halogenresten in den erfindungsgemäßen Borsilylaminen durch Kohlenwasserstoffreste, und zwar sowohl am Si als auch am B, führt neben der vorteilhaften Einbringung von Kohlenstoff weiterhin zu einer gezielten Verringerung der Anzahl reaktiver Halogenatome. Dadurch können die rheologischen Eigenschaften, insbesondere die Viskosität der aus den erfindungsgemäßen Verbindungen gebildeten Oligomeren oder Polymeren variiert oder/und eingestellt werden. Vorteilhaft sind Verbindungen, die die zwei Kohlenwasserstoffreste aufweisen (x + y = 2) oder die drei Kohlenwasserstoffreste (x + y = 3) aufweisen, welche noch zwei zur Vernetzung fähige Halogenatome enthalten, wodurch eine mehrdimensionale Vernetzung begrenzt wird und im Wesentlichen lineare Polymere erhalten werden.

In der Formel I können der Rest R und R¹ jeweils unabhängig einen Kohlenwasserstoffrest mit 1 bis 20 C-Atomen, vorzugsweise mit 1 bis 10 C-Atomen bedeuten. Ein Kohlenwasserstoffrest ist ein Rest, der aus den Elementen Kohlenstoff und Wasserstoff gebildet ist. Erfindungsgemäß kann der Kohlenwasserstoffrest verzweigt oder unverzweigt, gesättigt oder ungesättigt sein. Der Kohlenwasserstoffrest kann auch aromatische Gruppen enthalten, die wiederum mit Kohlenwasserstoffresten substituiert sein können. Beispiele für bevorzugte Kohlenwasserstoffreste sind z.B. unverzweigte gesättigte Kohlenwasserstoffreste, wie etwa C, bis C₂₀-Alkyl, insbesondere Methyl, Ethyl, n-Propyl, n-Butyl, n-Pentyl, n-Hexyl, n-Heptyl, n-Octyl, n-Nonyl und n-Decyl. Bei den Resten R kann es sich aber auch um verzweigte gesättigte Kohlenwasserstoffe, insbesondere verzweigte C₃ bis C₂₀-Alkyle handeln, wie etwa i-Propyl, i-Butyl, t-Butyl sowie weitere verzweigte Alkylreste. In einer weiteren bevorzugten Ausführungsform umfasst der Rest R eine oder mehrere olefinisch ungesättigte Gruppen. Beispiele für solche Reste sind Vinyl, Allyl, Butenyl, Pentenyl, Hexenyl, Heptenyl, Octenyl, Nonenyl, Decenyl, Butadienyl, Pentadienyl, Hexadienyl, Heptadienyl, Octadienyl, Nonadeinyl und Decadienyl. Der Rest R kann auch eine Alkingruppe, also eine C≡C-Bindung enthalten. In einer weiteren bevorzugten Ausführungsform enthält mindestes ein Rest R und bevorzugt alle Reste R eine aromatische Gruppe, insbesondere eine aromatische Gruppe mit 5 bis 10 C-Atomen, insbesondere 5 oder 6 C-Atomen, wie etwa eine Phenylgruppe oder eine mit einem Kohlenwasserstoff, insbesondere einem C₁-C₁₀-Kohlenwasserstoff, substituierte aromatische Gruppe, insbesondere Phenylgruppe, wie etwa Methylphenyl, Dimethylphenyl, Trimethylphenyl, Ethylphenyl oder Propylphenyl. Einschließlich der Substituenten umfasst der aromatische Rest bevorzugt von 5 bis 20, insbesondere bis 10 C-Atome. Die Kohlenwasserstoffreste R sowie R¹ können dabei jeweils unabhängig voneinander variiert werden.

Besonders bevorzugt umfasst mindestens ein Rest R oder/und R¹ und insbesondere alle Reste R und/oder R¹ eine C₁ bis C₂₀-Alkylgruppe insbesondere eine C₁-C₆-Alkylgruppe, eine Phenylgruppe, eine Vinylgruppe oder eine Allylgruppe oder einen Kohlenwasserstoffrest mit 1 bis 3 C-Atomen, insbesondere Methyl, Ethyl oder Propyl und am meisten bevorzugt Methyl.

Der Rest Hal steht für ein Halogenatom und bedeutet insbesondere Cl, Br oder I, wobei es bevorzugt ist, dass mindestens ein Rest Hal und bevorzugte alle Reste Hal Cl bedeuten.

Die der Erfindung zugrundeliegende Aufgabe wird weiterhin gelöst durch Bor-silyl-amine der Formel (I),

RₓHal₃₋ₓSi-NR¹BR_{y}Hal_{2-y} (I)

wobei Hal jeweils unabhängig Cl, bedeutet, R jeweils unabhängig einen Kohlenwasserstoffrest mit 1 bis 20 C-Atomen oder Wasserstoff darstellt, R¹ einen Kohlenwasserstoffrest mit 1 bis 20 C-Atomen oder Wasserstoff darstellt, x 0,1 oder 2 darstellt und y 0 oder 1 darstellt, mit der Maßgabe, dass es sich nicht um Trichlorsilylaminodichlorboran, Cl₃Si-NH-BCl₂ oder Chlordimethylsilyl-methylaminodichlorboran,(CH₃)₂ClSi-N(CH₃)-BCl₂ handelt.

Die Reste haben bevorzugt die oben angegebenen Bedeutungen. Bevorzugt ist R¹ ein Kohlenwasserstoffrest mit 1 bis 10 C-Atomen und besonders bevorzugt bedeuten R und R¹ bei jedem Auftreten unabhängig voneinander C₁ bis C₆ Alkyl, Phenyl, Vinyl oder Allyl. Hal ist
für jedes Auftreten Cl. Beispiele für bevorzugte Verbindungen sind Methyldichlorsilylaminodichlorboran, CH₃Cl₂-Si-NH-BCl_{2;} Dimethylchlorsilylaminodichlorboran, (CH₃)₂ClSi-NH-BCl₂, also Verbindungen mit dem Strukturmerkmal C-Si-N-B. Bevorzugte Ausführungsformen der Erfindung umfassen Verbindungen mit dem Strukturelement RHal₂Si-sowie R₂HalSi-, in denen ein oder zwei Halogenatome am Silicium durch Kohlenwasserstoffreste ersetzt werden. Dadurch wird zum einen der Kohlenstoffgehalt einer als solchen Verbindungen hergestellten Keramik erhöht, zum anderen haben solche Verbindungen eine verminderte Anzahl an zur Oligomerisierung bzw. Polymerisierung reaktiven Halogenatomen.

Weiterhin bevorzugt sind Verbindungen mit dem Strukturelement -BHal₂ oder -BHalR.

Vorteil dieser Vorläuferverbindungen der Formel (I) ist, dass durch Blockierung einzelner potentieller Verbrückungspositionen wie z.B. der NH-Funktiön der Vernetzungsgrad der aus den Vorläufermolekülen gebildeten Polymere gesenkt wird.

Aus den erfindungsgemäßen Verbindungen der allgemeinen Formel (1) lassen sich durch Reaktion mit primären oder sekundären Aminen monomere, oligomere oder polymere Borosilazanverbindungen herstellen. In solchen Borsilazanverbindungen sind die Halogenatome der Verbindung der Formel (1) ganz oder teilweise durch Aminogruppen substituiert. Die Erfindung betrifftdeshalb weiterhin Borsilazanverbindungen der allgemeinen Formel (II):

(R'R"N)_{q}RₓHal_{3-x-q}Si-N(R¹)-BR_{y}Hal_{2-y-z}(NR'R")_{z} (II)

worin R', R", R und R¹ unabhängig voneinander einen Kohlenwasserstoffrest mit 1 bis 20 C-Atomen, vorzugsweise 1 bis 10 C-Atomen oder Wasserstoff bedeuten, Hal Cl darstellt, q 0, 1, 2 oder 3 ist, x 0, 1 oder 2 ist, y 0 oder 1 ist und z 0, 1 oder 2 ist und x+q ≤ 3 sowie y+z ≤ 2, mit der Maßgabe, dass es sich nicht um Tris(dimethylamino)silylamino-bis(dimethylamino)boran ((CH₃)₂N)₃SiNH-B(N(CH₃)₂)₂ handelt.

Die bevorzugten Bedeutungen der Reste sind wie oben angegeben. Bevorzugt werden solche Boransilazanverbindungen der Formel (II), bei denen der Rest R¹ einen Kohlenwasserstoff mit 1 bis 10 Kohlenstoffatomen darstellt. Weiterhin ist R bevorzugt kein Wasserstoff.

q ist bevorzugt 0, 1 oder 2 oder/und x 1 oder 2. In der obigen Formel ist Weiterhin bevorzugt q+z ≥ 1, x+q ≤ 3 oder/und y+z ≤ 2.

Bevorzugt sind Borosilacanverbindungen der Formel (II), in denen die Halogenatome vollständig durch Aminogruppen substituiert sind. Solche Verbindungen weisen die Formel (R'R"N)_{q}RₓSi-N(R¹)-BR_{y}(NR'R")_{z} auf, worin q+x = 3 und y+z = 2.

Falls noch ein oder mehrere Halogenatome der Borsilacanverbindung vorliegen, stellt Hal bei jedem Auftreten Cl dar.

Weiterhin bevorzugt sind Borsilazanverbindungen mit der Formel

(R'R"N) R Hal Si-N(R¹)-B Hal₂,

(R'R"N) R₂ Si-N(R¹)-B Hal₂,

(R'R"N)₂ R Si-N(R¹)-B Hal₂,

R₂Ha Si-N(R¹)-B Hal (NR'R").

R₂ Hal Si-N(R¹)-B R (NR'R"),

R₂ Hal Si-N(R¹)-B (NR'R")₂,

(R'R"N) R₂ Si-N(R¹)-B Hal (NR'R"),

(R'R"N) R Hal Si-N(R¹)-B Hal (NR'R"),

(R'R"N) R Hal Si-N(R¹)-B R (NR'R"),

(R'R"N) R Hal Si-N(R¹)-B (NR'R")₂,

(R'R"N)₂ R Si-N(R¹)-B Hal (NR'R"),

(R'R"N) R Hal Si-N(R¹)-B R Hal,

(R'R"N) R₂ Si-N(R¹)-B R Hal oder

(R'R"N)₂ R Si-N(R¹)-B R Hal.

Besonders bevorzugt sind auch Borosilazanverbindungen, in denen alle Halogenatome durch Aminogruppen ersetzt worden sind, die also nur noch Kohlenwasserstoffreste oder Aminogruppenreste aufweisen. Solche Verbindungen haben die Formeln

(R'R"N) R₂ Si-N(R¹)-B (NR'R")₂,

(R'R"N) R₂ Si-N(R¹)-B R (NR'R"),

(R'R"N)₂ R Si-N(R¹)-B R (NR'R") oder

(R'R"N)₂ R Si-N(R¹)-B (NR'R")₂.

In den oben genannten Formeln hat der Rest R bei jedem Auftreten die oben bei der Verbindung (I) angegebenen und insbesondere die dort als bevorzugt angegebenen Bedeutungen. Besonders bevorzugt handelt es sich bei R um einen Kohlenwasserstoffrest mit 1 bis 3 C-Atomen, insbesondere um einen Methyl-, Ethyl- oder Propylrest oder um einen Phenylrest oder einen Vinylrest.

Die Reste R' und R" stellen jeweils unabhängig Wasserstoff oder einen Kohlenwasserstoffrest mit 1 bis 20 C-Atomen, vorzugsweise mit 1 bis 10 C-Atomen, dar. Bevorzugt sind Verbindungen, in denen wenigstens einer der Rest R' und R" einen Kohlenwasserstoffrest mit 1 bis 20 C-Atomen darstellt. Besonders bevorzugt wird R' und R" ausgewählt aus C₁ bis C₂₀-Alkylgruppen, insbesondere C₁ bis C₆-Alkylgruppen, wie etwa Methyl, Ethyl, Propyl, sowie aus Phenyl, Allyl- oder Vinylgruppen.

Besonders bevorzugt sind Verbindungen, in denen sowohl R als auch R' und R" bei jedem Auftreten Methyl darstellen.

Solche Borsilazanverbindungen lassen sich durch Umsetzung eines Boryl-silyl-amins nach Formel (I) mit einem Überschuss einer Aminverbindung R'R"NH bei Temperaturen von -90°C bis +300°C herstellen, bevorzugt von -50 °C bis +200 °C. Die Umsetzung kann in der Gasphase, in kondensierter Form oder in einem Lösungsmittel durchgeführt werden.

Durch Umsetzung von Verbindungen der Formeln (I) oder/und (II) mit einer Aminverbindung R'R"NH entstehen Oligo- oder Polyborosilazanverbindungen, die das Strukturmerkmal Si-N-B aufweisen.

Die monomeren oder oligomeren Einheiten können durch Temperaturbehandlung und/oder durch Vernetzung mit Ammoniak oder einem Amin zu Polymeren umgesetzt werden. Die Erfindung betrifft deshalb weiterhin eine Oligo- oder Polyborosilazanverbindung, welche durch Umsetzen einer Verbindung der Formel (I) oder/und einer Verbindung der Formel (II) mit einer Verbindung der Formel (V)

HNR'R" (V)

oder durch thermische Polymerisation einer Verbindung der Formel (I) oder der Formel (II) erhältlich ist. Solche Oligo- oder Polyborosilazenverbindungen weisen das Strukturmerkmal Si-N-B auf.

Die Umsetzung der Monomeren mit den genannten Aminen kann sowohl in offenen als auch in geschlossenen Systemen erfolgen. Die Reaktionstemperaturen liegen bevorzugt zwischen -78 und + 500 °C, bevorzugt zwischen -50 °C und +250 °C, die Reaktionsdauer zwischen 5 Minuten und 20 Tagen.

Zur Umsetzung geeignete Amine umfassen beispielsweise Methylamin, Ethylamin, Dimethylamin, Anilin oder Ammoniak. Die Reaktion kann sowohl in den reinen Komponenten als auch in einem aprotischen Lösungsmittel, wie etwa Hexan, Toluol, THF oder Methylenchlorid durchgeführt werden. Die Reaktionstemperatur beträgt bevorzugt mindestens -100 °C, mehr bevorzugt mindestens -78 °C und bis zu bevorzugt höchstens 100 °C, mehr bevorzugt bis zu höchstens 5 °C.

Die Konsistenz der erfindungsgemäßen Polyborosilazane reicht in Abhängigkeit von den Resten R, R',R", R¹, sowie dem Polymerisationsgrad von leicht viskos über harz- bzw. wachsartig bis hin zum festen Zustand. Die thermische Vernetzung erfolgt durch Abspaltung eines Aminrestes unter Knüpfung von neuen Si-N oder B-N Bindungen. Die Vernetzung mittels Ammoniak erfolgt durch Substitution einer NR'R"Gruppe durch eine NH₂-Gruppe, die dann weiter vernetzt.

Die Oligo- oder Polyborosilazane weisen insbesondere die Strukturmerkmale C-Si-N-B-N-B-N-Si-C,C-Si-N-B-N-Si-N-B,Si-N-B-N-Si-N-B-C,Si-N-B-N-B-N-Si, Si-N-B-N-Si-N-B oder/und B-N-Si-N-Si-N-B auf. Die angegebenen Strukturmerkmale sind - zur besseren Übersichtlichkeit - lineare Sequenzen, wobei Si selbstverständlich immer an vier Nachbaratome, B und N immer an drei Nachbaratome und C jeweils an drei oder vier Nachbaratome gebunden ist. Die entsprechenden Bindestrichen wurden zur besseren Übersichtlichkeit weggelassen, können jedoch vom Fachmann ohne weiteres mitgelesen werden. Verzweigungen können an jedem Atom auftreten.

Besonders bevorzugt sind B und Si nur von N oder/und C umgeben. N und C könne, beliebig umgeben sein, wobei N-N-Bindungen bevorzugt nicht vorliegen.

Aus den erfindungsgemäßen Polyborsilazanen können die gewünschten Siliciumcarbobornitridkeramiken hergestellt werden. Ein weiterer Gegenstand der Erfindung ist deshalb ein Verfahren zur Herstellung einer Siliciumcarbobornitridkeramik, welches dadurch gekennzeichnet ist, dass man eine monomere, oligomere oder polymere Borosilazanverbindung, wie hierin beschrieben, in einer inerten oder einer aminhaltigen, insbesondere einer ammoniakhaltigen Atmosphäre bei Temperaturen zwischen 800 °C und 2000°C, bevorzugt von 800° C bis 1800 °C, stärker bevorzugt zwischen 1000°C und 1700°C, und am meisten bevorzugt bei 1300°C bis 1700°C tempert. Durch Aminolyse- bzw. Ammonolysereaktion und anschließende Pyrolyse werden die Borsilazane in ein Siliciumcarbobornitridkeramikpulver überführt. Die Keramik kann bei der Pyrolyse amorph oder zumindest teilweise kristallin anfallen. Bevorzugt handelt es sich um ein amorphes Siliciumcarbobornitrid. Die Keramik zeichnet,sich insbesondere durch eine hohe Temperaturbeständigkeit und eine Inertheit gegenüber Sauerstoff aus. Innerhalb der Keramik sind die darin enthaltenen Elemente nahezu vollständig homogen verteilt. Die Kristallisation des amorphen Materials zu einer Kompositkeramik aus SiC, Si₃N₄ oder/und BN kann durch Auslagern bei einer Temperatur > 1700°C erfolgen. In einer solchen kristallinen Kompositkeramik sind SiC, Si₃N₄ oder/und BN Kristallite vorzugsweise im Nanometermaßstab im Wesentlichen völlig homogen verteilt.

Bevorzugt liegen in der Keramik Si-N-B-Struktureinheiten vor und die Elemente Si, N, B und gegebenfalls C sind bevorzugt zu mehr als 90 Gewichts-%, mehr bevorzugt zu mehr als 95 Gew.-% enthalten. Dabei sind kohlenstoffhaltige Kermiken bevorzugt. Die Siliciumcarbobornitridkeramik zeichnet sich insbesondere durch ihren geringen Sauerstoffgehalt von bevorzugt < 5 Gewichts-%, mehr bevorzugt < 2 Gewichts-% und am meisten bevorzugt < 1 Gewichts-% aus. Mit dem erfindungsgemäßen Verfahren zur Herstellung einer Siliciumcarbobornitridkeramik ist es möglich, Keramiken herzustellen, die praktisch frei von Sauerstoff sind.

Das keramische Material enthält bevorzugt die Struktureinheiten C-Si-N-B oder/und Si-N-B-C und besonders bevorzugt die Struktureinheiten C-Si-N-B-C, und insbesondere die Struktureinheiten C-Si-N-B-N-B-N-Si-C, C-Si-N-B-N-Si-N-B, Si-N-B-N-Si-N-B-C, Si-N-B-N-B-N-Si, Si-N-B-N-Si-N-B oder/und B-N-Si-N-Si-N-B. Die angegebenen Strukturmerkmale sind - zur besseren Übersichtlichkeit - lineare Sequenzen, wobei Si selbstverständlich immer an vier Nachbaratome, B und N immer an drei Nachbaratome und C jeweils an drei oder vier Nachbaratome gebunden ist. Die entsprechenden Bindestriche wurden zur besseren Übersichtlichkeit weggelassen, können jedoch vom Fachmann ohne weiteres mitgelesen werden. Verzweigungen können an jedem Atom auftreten.

Bevorzugt sind B und Si nur von N oder/und C umgeben. N und C können beliebig umgeben sein, wobei N-N-Bindungen bevorzugt nicht vorliegen.

Für die Umsetzung der Borsilazanverbindungen mit Ammoniak kann man alle literaturbekannten Aminolyse- bzw. Ammonolyseverfahren von Tetrachlorsilan nutzen, beispielsweise die Umsetzung mit festem bzw. flüssigem Ammoniak bei tiefen Temperaturen (US-A-4196178), die Reaktion mit gasförmigem Ammoniak in einem organischen Lösungsmittel (US-A-3959446) oder die Umsetzung mit Ammoniak in einer Hochtemperaturreaktion unter Abspaltung von Chlorwasserstoff (US-A-4145224).

In einer bevorzugten Ausführungsform werden die Boryl-silyl-amine der Formel (1) mit Ammoniak bei Temperaturen zwischen -200 °C und + 1400 °C ammonolysiert und das entstehende Zwischenprodukt in einer inerten Atmosphäre oder/und Ammoniak bei Temperaturen zwischen 800 °C und 1400 °C calciniert.

Unabhängig von dieser speziellen Ausführungsform kann die inerte Atmosphäre ausgewählt werden aus einer Edelgasatmosphäre, beispielsweise einer Argon- oder Heliumatmosphäre, einer Stickstoffatmosphäre oder einer Atmosphäre aus einem anderen Inertgas, welches unter den Reaktionsbedingungen zwischen 800 °C und 1700 °C nicht mit den Reaktionspartnern reagiert.

Neben den so erhältlichen, bevorzugt amorphen oder kristallinen Keramiken und Verfahren zu deren Herstellung betrifft die vorliegende Erfindung auch die Verwendung der monomeren, oligomeren bzw. polymeren Borosilazanverbindungen sowie von amorphen und zumindest teilweise kristallinen keramischen Materialien zur Herstellung von keramischen Fasern, keramischen Beschichtungen, keramischen Formkörpern, keramischen Folien oder/und keramischen Mikrostrukturen.

Die Polyborosilazane können direkt oder gelöst in organischen Solventien zu Formkörpern, Fasern, Folien oder Beschichtungen verarbeitet werden. Die Viskosität der Polymere kann erfindungsgemäß durch die Wahl der eingesetzten Verbindungen der Formel (I) und durch die anschließende thermische Behandlung den Erfordernissen angepasst werden.

Die geformten Polyborosilazane können einer Pyrolyse und/oder einer physikalischen oder chemischen Vorbehandlung, z.B. einer Härtung oder Vernetzung, unterzogen werden, um das Polymer unschmelzbar zu machen.

Eine geeignete Behandlung zur Herstellung unschmelzbarer Polyborosilazane ist beispielsweise in DE 195 30 390 A1 beschrieben, wobei dort unschmelzbare Verbindungen durch Umsetzung mit Boran-Amin-Adukten erhalten werden.

Mikrostrukturen können beispielsweise durch Spritzguss oder lithographische Verfahren erzeugt werden. Besonders bevorzugt werden die Keramiken in Form von Fasern hergestellt, aus denen beilspielsweise Gewebe bzw. Geflechte angefertigt werden, die als Füllstoffe zur Erhöhung der Festigkeit oder Zähigkeit für andere Keramiken eingesetzt werden können.

Weiterhin können die erfindungsgemäßen Borsilazanverbindungen auch in einer chemischen Gasphasenabscheidung (CVD) oder einer physikalischen Gasphasenabscheidung (PVD) eingesetzt werden. Durch die Beschichtung von Substraten mittels CVD oder PVD können keramische Überzüge oder Beschichtungen hergestellt werden. Die Gasphasenabscheidung kann dabei wie im Stand der Technik beschrieben, durchgeführt werden (siehe z.B. DE 196 35 848 C1).

Nachfolgend wird die Erfindung anhand einiger Beispiele erläutert.

### Beispiel 1:

### Darstellung von Methyl-trichlorsilyl-amin

Ein 4 I-Dreihalskolben ist mit einem 250 ml-Kolben und einer Kühlfalle jeweils über einen Hahn verbunden. In den evakuierten 4 I-Dreihalskolben werden 2 ml Tetrachlorsilan (18 mmol) gegeben. Der 250 ml-Kolben wird mit Methylamin (bei Normaldruck, 14 mmol) gefüllt. Sobald Tetrachlorsilan vollständig verdampft ist, wird Methylamin in den 4 I-Kolben strömen gelassen. Nach einer Reaktionszeit von 10-60 s wird das Produkt in der Kühlfalle kondensiert. Der Vorgang kann beliebig oft wiederholt werden. Die Stoffmengen sind dabei über weite Bereiche variierbar. Man erhält das Reaktionsprodukt gemischt mit dem Tetrachlorsilan-Überschuss als klare Flüssigkeit. Bei Raumtemperatur ist dieses beliebig haltbar, bei 60°C erfolgt Polymerisation.
¹H-NMR (C₆D₆): δ_{CH} = 2,30 ppm (s); δ_{NH} = 1,39 ppm (s); ¹³C-NMR (C₆D₆): δ = 27,2 ppm

### Beispiel 2:

### Darstellung von Dichlorboryl-methyl-trichlorsilyl-amin

Das Reaktionsprodukt aus Beispiel 1 (ca. 0,1 mol) wird bei -78 °C mit 250 ml trockenem n-Hexan verdünnt. 20 g Trichlorboran (0,17 mol) werden aufkondensiert. Es bildet sich eine milchige Suspension des primär gebildeten Adduktes. Die Temperatur der Reaktionsmischung wird langsam bis zum Sieden des Hexans erhöht Dabei wird die Lösung klar und es fällt ein körniger Salz-Niederschlag (Cl₃SiNH₂Me⁺Cl⁻) aus. Dieser wird abfiltriert und das Filtrat wird fraktioniert destilliert. Bei 58 °C und 11 mbar werden 12 g (ca. 0,05 mol) Produkt erhalten. Die Ausbeute ist damit quantitativ.
NMR (C₇D₈; TMS bzw. BF₃·OEt₂); ¹H: δ = 2,68 ppm; ¹³C: δ = 37,16 ppm; "B: δ = 42,8 ppm
MS (EI): m/z = 245 amu (M⁺); 244 amu (M-H⁺); 209 amu (M-HCl⁺) Schmelzpunkt: 8-14 °C

### Beispiel 3:

### Vernetzung von Dichlorboryl-methyl-trichlorsilyl-amin mit Methylamin

0,5 mol Methylamin werden in 200 ml trockenem n Hexan gelöst und auf -78 °C gekühlt. Unter Rühren wird innerhalb von 4 Stunden eine Lösung aus 6 g Dichlorboryl-methyl-trichlorsilyl-amin (25 mmol) und 250 ml trockenem n-Hexan zugetropft. Nach dem Aufwärmen wird der Niederschlag von Methylammoniumchlorid abfiltriert und das Hexan bei vermindertem Druck abdestilliert. Man erhält 4,5 g einer leicht viskosen klaren Flüssigkeit. Nach thermischer Behandlung im Temperaturbereich zwischen 100-300 °C erhält man letztlich ca. 3 g festes Polymer. Dabei lässt sich auch jede Viskosität im dazwischen liegenden Bereich gezielt einstellen.

### Beispiel 4:

### Darstellung einer SiBCN-Keramik

Das Polymer aus Beispiel 3 wird in einem Tiegel aus hexagonalem Bornitrid mit einer Heizrate von 300 K/h im Stickstoffstrom auf 1400 °C erhitzt. Man erhält ein amorphes schwarzes Keramik-Pulver.

### Beispiel 5:

### Darstellung von Chlor(methyl)boryl-methyl-trichlorsilyl-amin

Das Reaktionsprodukt aus Beispiel 1 (ca. 30 mmol) wird bei -78 °C mit 250 ml trockenem n-Hexan verdünnt. 3 g Dichlormcthylboran (31 mmol) werden auskondensiert. Es bildet sich eine milchige Suspension des primär gebildeten Adduktes. Die Temperatur der Reaktionsmischung wird langsam erhöht wobei die Lösung klar wird und ein körniger Salzniederschlag (Cl₃SiNH₂Me⁺Cl⁻) ausfällt. Dieser wird abfiltriert und das Filtrat wird eingeengt. Es werden 3 g (ca. 13 mmol) Produkt erhalten.

### Beispiel 6:

### Darstellung von Dichlorboryl-methyl-dichlor(methyl)silyl-amin

Ein 4 I-Dreihalskolben ist mit einem 250 ml-Kolben und einer Kühlfalle jeweils über einen Hahn verbunden. In der Kühlfalle werden 100 ml trockenes n-Hexan und im Überschuss Trichlorboran vorgelegt. In den evakuierten 4 I-Dreihalskolben werden 2 ml Trichlormethylsilan (17 mmol) gegeben. Der 250 ml-Kolben wird mit Methylamin (bei Normaldruck, 14 mmol) gefüllt. Sobald das Silan vollständig verdampft ist, wird Methylamin in den 4 I-Kolben strömen gelassen. Nach einer Reaktionszeit von 10-60 s wird das Produkt in der Kühlfalle kondensiert. Dieser Vorgang wird 20 mal wiederholt. Die Temperatur der Reaktionsmischung wird langsam erhöht. Dabei wird die Lösung klar und es fällt ein körniger Salz-Niederschlag (MeCl₂SiNH₂Me⁺Cl⁻) aus. Dieser wird abfiltriert und das Filtrat wird eingeengt. Es werden 9 g (ca. 40 mmol) Produkt erhalten.

| | |
|---|---|
| NMR (CDCl₃; TMS); | ¹H: δ = 30,8 ppm (N-CH₃); ¹H:δ = 1,13 ppm (Si-CH₃); |
| | ¹³C:δ = 36,5 ppm (N-CH₃); ¹³C:δ = 9,2 ppm (Si-CH₃) |

MS (El): m/z = 225 amu (M⁺); m/z = 219 amu (M-H⁺); M7Z = 187 amu (M-HCl⁺); m/z = 160 amu (SiBNCl₃ ⁺); M7Z = 138 amu (CH₃SiBNCl₂⁺) Schmelzpunkt: -38 °C
Siedepunkt: 50 °C bei 0,8 kPa

### Beispiel 7:

### Kontinuierliche Darstellung von Methyl-trichlorsilyl-amin

Ein Reaktionskolben wird jeweils über Drosselventile mit Vorratsbehältern für Methylamin und Tetrachlorsilan verbunden. Die Reaktionsmischung wird kontinuierlich abgepumpt und in einer Kühlfalle ausgefroren. Genaue Mengenverhältnisse können bei dieser Reaktionsführung nicht angegeben werden, es ist muss jedoch sichergestellt sein, dass das Amin immer im Unterschuss vorhanden ist. Der Prozess kann aufrecht erhalten werden bis die Ablagerung von Methylammoniumchlorid den Reaktionskolben zu sehr ausfüllt.

### Beispiel 8:

### Kontinuerliche Darstellung des Adduktes aus Methyl-trichlorsilyl-amin und Trichlorboran

Methyl-trichlorsilyl-amin wird hergestellt indem Methylamin und bei Normaldruck verdampftes Tetrachlorsilan durch regelbare Drosselventile gemeinsam in ein kontinuierlich evakuiertes Reaktionsrohr einströmen. Das Stoffmengenverhältnis von Methylamin zu Tetrachlorsilan wird mit Gasströmungsmessern gemessen und so einjustiert, dass es zwischen 1:0,5 und 1:0,8 liegt. Das Reaktionsrohr wird idealerweise von außen mit Wasser gekühlt. Im Reaktionsrohr scheidet sich an den Wänden kristallines Methylammoniumchlorid als harte Schicht ab.

Hinter dem Reaktionsrohr strömt durch ein weiteres Drosselventil kontinuierlich Trichlorboran in geringem Überschuss dazu. Das Addukt aus methyl-trichlorsilyl-amin und Trichlorboran bildet sich als farbloser Niederschlag in quantitativer Ausbeute. Bei einer typischen Versuchsdurchführung werden innerhalb von 5 bis 8 Stunden ca. 700 g Tetrachlorsilan, 100 g Methylamin und 400 g Trichlorboran umgesetzt.

### Beispiel 9:

### Synthese von Dichlorboryl-methyl-trichlorsilyl-amin

### Variante ohne Lösungsmittel:

100 g des Adduktes aus methyl-trichlorsilyl-amin und Trichlorboran (Produkt aus Beispiel 8) werdenin Argon-Atmosphäre auf 70 °C erwärmt. Dabei destilliert gebildetes Trichlorboran ab. Es bleibt eine Mischung aus Dichlorboryl-methyl-trichlorsilyl-amin und dem Salz Cl₃SiNH₂Me⁺Cl⁻ zurück. Im Feinvakuum kann Dichlorboryl-methyl-trichlorsilylamin vom unflüchtigen Salz abdestilliert werden.

### Variante mit Lösungsmittel:

100 g des Adduktes aus Methyl-trichlorsilyl-amin und Trichlorboran (Produkt aus Beispiel 8) werden in 500 ml getrocknetem n-Hexan suspendiert. Die Suspension wird für 30 Minuten unter Rückfluss sieden gelassen. Dabei bildet sich aus der milchigen Suspension eine klare Lösung mit einem körnigen Salz-Niederschlag (Cl₃SiNH₂Me⁺Cl⁻) und es destilliert gebildetes Trichlorboran ab. Der Salzniederschlag wird abfiltriert und nach dem Abdestillieren des Lösemittels bleiben 43 g Dichlorboryl-methyl-trichlorsilyl-amin zurück. Das Reaktionsprodukt wurde bereits in Beispiel 2 charakterisiert.

## Patentansprüche

1. Verfahren zur Herstellung einer Verbindung der Formel (I)
RₓHal₃₋ₓSi-NR¹-BR_{y}Hal_{2-y},
worin Hal jeweils unabhängig Cl, Br oder **I** bedeutet,
R jeweils unabhängig einen Kohlenwasserstoffrest mit 1 bis 20 C-Atomen oder Wasserstoff darstellt,
R¹ einen Kohlenwasserstoffrest mit 1 bis 20 C-Atomen oder Wasserstoff darstellt,
x 0,1 oder 2 ist und
y 0 oder 1 ist,
**dadurch gekennzeichnet,**
**dass** eine Amin-Komponente R¹NH₂ nacheinander mit
einer Silankomponente SiHal₄₋ₓRₓ und
einer Boran-Komponente BHal_{3-y}R_{y}
umgesetzt wird, wobei in einem ersten Schritt die Silan-Komponente in der Gasphase mit der Amin-Komponente umgesetzt wird.

2. Verfahren nach Anspruch 1,
**dadurch gekennzeichnet,**
**dass** in einem zweiten Schritt die Boran-Komponente in kondensierter Phase, in einem inerten Lösungsmittel oder in Gasphase mit dem bei der Umsetzung der Silan-Komponente mit der Amin-Komponente gebildeten Zwischenprodukt umgesetzt wird.

3. Verfahren nach einem der vorhergehenden Ansprüche,
**dadurch gekennzeichnet,**
**dass** Dehydrohalogenierungsschritte von einer Hilfsbase unterstützt werden.

4. Borosilazanverbindung der Formel (II)
(R'R"N)_{q}RₓHal_{3-x-q}Si-N(R¹)-BR_{y}Hal_{2-y-z}(NR'R")_{z},
worin R', R" und R¹ unabhängig voneinander einen Kohlenwasserstoffrest mit 1 bis 20 C-Atomen oder Wasserstoff bedeuten,
R jeweils unabhängig einen Kohlenwasserstoffrest mit 1 bis 3 C-Atomen oder Wasserstoff darstellt,
Hal Cl darstellt,
q 0,1, 2 oder 3 ist,
x 0,1 oder 2 ist,
y 0 oder 1 ist,
z 0,1 oder 2 ist und
x+q ≤ 3 und y+z ≤ 2 ist,
mit der Maßgabe, dass es sich nicht um
Tris(dimethylamino)silylaminobis(dimethylamino)boran ((CH₃)₂N₃Si-NH-B(N(CH₃)₂)₂, Trichlorsilylaminodichlorboran Cl₃Si-NH-BCl₂ oder Chlordimethylsilylmethylaminodichlorboran (CH₃)₂ClSi-N(CH₃)-BCl₂ handelt.

5. Borsilazanverbindung nach Anspruch 4,
**dadurch gekennzeichnet,**
**dass** der Rest R¹ einen Kohlenwasserstoff mit 1 bis 10 Kohlenstoffatomen darstellt.

6. Verbindung nach Anspruch 4,
**dadurch gekennzeichnet,**
**dass** es sich um ein Boryl-sityl-amin der Formel (I) RₓHal₃₋ₓSi-NR¹BR_{y}Hal_{2-y} handelt,
worin Hal jeweils unabhängig Cl bedeutet,
R jeweils unabhängig einen Kohlenwasserstoffrest mit 1 bis 3 C-Atomen oder Wasserstoff darstellt,
R¹ einen Kohlenwasserstoffrest mit 1 bis 20 C-Atomen oder Wasserstoff darstellt,
x 0,1 oder 2 darstellt und
y 0 oder 1 darstellt,
mit der Maßgabe, dass es sich nicht um Trichlorsilylaminodichlorboran Cl₃Si-NH-BCl₂ oder Chlordimethylsilylmethylaminodichlorboran (CH₃)₂ClS₁-N(CH₃)-BCl₂ handelt.

7. Verbindung nach Anspruch 6,
**dadurch gekennzeichnet,**
**dass** R¹ einen Kohlenwasserstoffrest mit 1 bis 10 C-Atomen darstellt.

8. Verbindung nach Anspruch 6 oder 7,
**dadurch gekennzeichnet,**
**dass** R und R¹ bei jedem Auftreten unabhängig voneinander einen Kohlenwasserstoffrest mit 1 bis 3 C-Atomen darstellen.

9. Verfahren zur Herstellung einer Borsilazanverbindung nach Anspruch 4 oder 5,
**dadurch gekennzeichnet,**
**dass** man ein gemäß einem Verfahren nach einem der Ansprüche 1 bis 3 erhältliches Boryl-silyl-amin oder ein Boryl-silyl-amin nach einem der Ansprüche 6 bis 8 mit einer Aminverbindung R'R"NH bei Temperaturen von -90°C bis +300°C umsetzt.

10. Verfahren nach Anspruch 9,
**dadurch gekennzeichnet,**
**dass** die Umsetzung in der Gasphase, in kondensierter Form oder in einem Lösungsmittel durchgeführt wird.

11. Oligo- oder Polyborosilazanverbindung, erhältlich durch Umsetzen einer oder mehrerer Bor-silyl-amin-Verbindungen der Formel (I)
RₓHal₃₋ₓSi-NR¹BR_{y}Hal_{2-y},
worin Hal jeweils unabhängig Cl bedeutet,
R jeweils unabhängig einen Kohlenwasserstoffrest mit 1 bis 3 C-Atomen oder Wasserstoff darstellt,
R¹, R' und R" jeweils unabhängig einen Kohlenwasserstoffrest mit 1 bis 20 C-Atomen oder Wasserstoff darstellt,
x 0,1 oder 2 darstellt und
y 0 oder 1 darstellt,
mit der Maßgabe, dass es sich bei der Verbindung (1) der Formel nicht um Trichlorsilylaminodichlorboran, Cl₃Si-NH-BCl₂ handelt, oder/und erhältlich durch Umsetzen einer Borsilazanverbindung nach Anspruch 4 oder 5 mit einer Aminverbindung R'R"NH,
**dadurch gekennzeichnet,**
**dass** sie das Strukturmerkmal Si-N-B aufweist.

12. Verfahren zur Herstellung einer Siliciumcarbobornitridkeramik,
**dadurch gekennzeichnet,**
**dass** man Boryl-silyl-amine nach einem der Ansprüche 6 bis 8 oder erhältlich gemäß einem Verfahren nach einem der Ansprüche 1 bis 3 oder Borosilazanverbindungen nach einem der Ansprüche 4 oder 5 mit Ammoniak bei Temperaturen zwischen -200°C und +1400°C ammonolysiert und das entstehende Zwischenprodukt in einer inerten Atmosphäre oder/und Ammoniak bei Temperaturen zwischen 800°C und 1400°C calciniert.

13. Verfahren nach Anspruch 12,
**dadurch gekennzeichnet,**
**dass** ein amorphes Siliciumcarbobornitridkeramikpulver hergestellt wird.

14. Verfahren zur Herstellung eines keramischen Materials,
**dadurch gekennzeichnet,**
**dass** Oligo- oder Polyborosilazan-Verbindungen gemäß Anspruch 11 in einer inerten oder Ammoniak-haltigen Atmosphäre bei Temperaturen von 800°C bis 1800°C pyrolisiert werden.

## Claims

1. Process for preparing a compound of the formula (I)
RₓHal₃₋ₓSi-NR¹-BR_{y}Hal_{2-y},
where Hal are each, independently of one another, Cl, Br or I,
R are each, independently of one another, a hydrocarbon radical having from 1 to 20 carbon atoms or hydrogen,
R¹ is a hydrocarbon radical having from 1 to 20 carbon atoms or hydrogen,
x is 0, 1 or 2 and
y is 0 or 1,
**characterized in that** an amine component R¹NH₂ is reacted successively with a silane component SiHal₄₋ₓRₓ and a borane component BHal_{3-y}R_{y}, where in a first step, the silane component is reacted with the amine component in the gas phase.

2. Process according to Claim 1, **characterized in that**, in a second step, the borane component is reacted in the condensed phase, in an inert solvent or in the gas phase with the intermediate formed in the reaction of the silane component with the amine component.

3. Process according to any of the preceding claims, **characterized in that** dehydrohalogenation steps are aided by an auxiliary base.

4. Borosilazane compound of the formula (II)
(R'R"N)_{q}RₓHal_{3-x-q}Si-N(R¹)-BR_{y}Hal_{2-y-z}(NR'R")_{z},
where R', R" and R¹ are each, independently of one another, a hydrocarbon radical having from 1 to 20 carbon atoms or hydrogen,
R are each, independently of one another, a hydrocarbon radical having from 1 to 20 carbon atoms or hydrogen,
R are each, independently of one another, a hydrocarbon radical having from 1 to 3 carbon atoms or hydrogen,
Hal is Cl,
q is 0, 1, 2 or 3,
x is 0, 1 or 2,
y is 0 or 1,
z is 0, 1 or 2 and
x + q ≤ 3 and y + z ≤ 2,
with the proviso that the compound is not tris(dimethylamino)silylaminobis(dimethylamino)-borane ((CH₃)₂N)₃Si-NH-B(N(CH₃)₂)₂, trichlorosilylaminodichloroborane, Cl₃Si-NH-BCl₂, or chlorodimethylsilylmethylaminodichloroborane, (CH₃)₂ClSi-N(CH₃)-BCl₂.

5. Borosilazane compound according to Claim 4, **characterized in that** the radical R¹ is a hydrocarbon having from 1 to 10 carbon atoms.

6. Compound according to Claim 4, **characterized in that** it is a borylsilylamine of the formula (I)
RₓHal₃₋ₓSi-NR¹BR_{y}Hal_{2-y},
where Hal are each, independently of one another, Cl,
R are each, independently of one another, a hydrocarbon radical having from 1 to 3 carbon atoms or hydrogen,
R¹ is a hydrocarbon radical having from 1 to 20 carbon atoms or hydrogen,
x is 0, 1 or 2 and
y is 0 or 1,
with the proviso that the compound is not trichlorosilylaminodichloroborane, Cl₃Si-NH-BCl₂, or chlorodimethylsilylmethylaminodichloroborane, (CH₃)₂ClSi-N(CH₃)-BCl₂.

7. Compound according to Claim 6, **characterized in that** R¹ is a hydrocarbon radical having from 1 to 10 carbon atoms.

8. Compound according to Claim 6 or 7, **characterized in that** R and R¹ are each, independently on each occurrence, a hydrocarbon radical having from 1 to 3 carbon atoms.

9. Process for preparing a borosilazane compound according to Claim 4 or 5, **characterized in that** a borylsilylamine obtainable by a process according to any of Claims 1 to 3 or a borylsilylamine according to any of Claims 6 to 8 is reacted with an amine compound R'R"NH at temperatures of from -90°C to +300°C.

10. Process according to Claim 9, **characterized in that** the reaction is carried out in the gas phase, in condensed form or in a solvent.

11. Oligoborosilazane or polyborosilazane compound obtainable by reacting one or more borylsilylamine compounds of the formula (I)
RₓHal₃₋ₓSi-NR¹BR_{y}Hal_{2-y},
where Hal are each, independently of one another, Cl,
R are each, independently of one another, a hydrocarbon radical having from 1 to 3 carbon atoms or hydrogen,
R¹, R' and R" are each, independently of one another, a hydrocarbon radical having from 1 to 20 carbon atoms or hydrogen,
x is 0, 1 or 2 and
y is 0 or 1,
with the proviso that the compound of the formula (I) is not trichlorosilylaminodichloroborane, Cl₃Si-NH-BCl₂, or/and obtainable by reacting a borosilazane compound according to Claim 4 or 5 with an amine compound R'R"NH, **characterized in that** it has the structural feature Si-N-B.

12. Process for preparing a silicon carboboronitride ceramic, **characterized in that** borylsilylamines according to any of Claims 6 to 8 or obtainable by a process according to any of Claims 1 to 3 or borosilazane compounds according to Claim 4 or 5 are ammonolyzed by means of ammonia at temperatures of from -200°C to +1400°C and the intermediate formed is calcined at temperatures of from 800°C to 1400°C in an inert atmosphere or/and ammonia.

13. Process according to Claim 12, **characterized in that** an amorphous silicon carboboronitride ceramic powder is prepared.

14. Process for preparing a ceramic material, **characterized in that** oligoborosilazane or polyborosilazane compounds according to Claim 11 are pyrolyzed at temperatures of from 800°C to 1800°C in an inert or ammonia-containing atmosphere.

## Revendications

1. Procédé de préparation d'un composé de formule (I) RₓHal₃₋ₓSi-NR¹-BR_{y}Hal_{2-y}, dans lequel Hal représente respectivement indépendamment Cl, Br ou I,
R représente respectivement indépendamment un résidu d'hydrocarbure avec 1 à 20 atomes de C ou de l'hydrogène,
R¹ représente un résidu d'hydrocarbure avec 1 à 20 atomes de C ou de l'hydrogène,
x est égal à 0, 1 ou 2 et
y est égal à 0 ou 1, **caractérisé en ce qu'**on fait réagir un composant amine R¹NH₂ successivement avec un composant silane SiHal₄₋ₓRₓ et un composant borane BHal₃-_{y}R_{y}, en faisant réagir dans une première étape le composant silane en phase gazeuse avec le composant amine.

2. Procédé selon la revendication 1, **caractérisé en ce que**, dans une deuxième étape, on fait réagir le composant borane en phase condensée, dans un solvant inerte ou en phase gazeuse avec le produit intermédiaire formé lors de la réaction du composant silane avec le composant amine.

3. Procédé selon l'une des revendications précédentes, **caractérisé en ce que** les étapes de déshydrohalogénation sont effectuées en présence d'une base auxiliaire.

4. Composé de borosilazane de formule (II) (R'R"N)_{q}RₓHal_{3-x-q}Si-N(R¹)-BR_{y}Hal_{2-y-z}(NR'R")_{z}, dans lequel R', R" et R¹ représentent indépendamment l'un de l'autre un résidu d'hydrocarbure avec 1 à 20 atomes de C ou de l'hydrogène,
R représente respectivement indépendamment un résidu d'hydrocarbure avec 1 à 3 atomes de C ou de l'hydrogène, Hal représente CI,
q est égal à 0, 1, 2 ou 3,
x est égal à 0, 1 ou 2,
y est égal à 0 ou 1,
z est égal à 0, 1 ou 2 et
x+q est ≤ 3 et y+z est ≤ 2, sous réserve qu'il ne s'agisse pas du tris(diméthylamino)silylaminobis(diméthylamino)borane de formule ((CH₃)₂N)₃Si-NH-B(N(CH₃)₂)₂, du trichlorosilylaminodichloroborane de formule Cl₃Si-NH-BCl₂ ou du chlorodiméthylsilylméthylaminodichloroborane de formule (CH₃)₂ClSi-N(CH₃)-BCl₂.

5. Composé de borosilazane selon la revendication 4, **caractérisé en ce que** le résidu R¹ représente un hydrocarbure avec 1 à 10 atomes de carbone.

6. Composé selon la revendication 4, **caractérisé en ce qu'**il s'agit d'une boryl-silyl-amine de formule (I) RₓHal₃₋ₓSi-NR¹BR_{y}Hal_{2-y}, dans lequel Hal représente respectivement indépendamment CI,
R représente respectivement indépendamment un résidu d'hydrocarbure avec 1 à 3 atomes de C ou de l'hydrogène,
R¹ représente un résidu d'hydrocarbure avec 1 à 20 atomes de C ou de l'hydrogène,
x est égal à 0, 1 ou 2 et
y est égal à 0 ou 1, sous réserve qu'il ne s'agisse pas du trichlorosilylaminodichloroborane de formule Cl₃Si-NH-BCl₂ ou du chlorodiméthylsilylméthylaminodichloroborane de formule (CH₃)₂ClSi-N(CH₃)-BCl₂.

7. Composé selon la revendication 6, **caractérisé en ce que** R¹ représente un résidu d'hydrocarbure avec 1 à 10 atomes de C.

8. Composé selon la revendication 6 ou 7, **caractérisé en ce que** R et R¹ représentent lors de chacune de leur apparition indépendamment l'un de l'autre un résidu d'hydrocarbure avec 1 à 3 atomes de C.

9. Procédé de préparation d'un composé de borosilazane selon la revendication 4 ou 5, **caractérisé en ce que** l'on fait réagir une boryl-silyl-amine pouvant être obtenue selon le procédé selon l'une des revendications 1 à 3 ou une boryl-silyl-amine selon l'une des revendications 6 à 8 avec un composé amine de formule R'R"NH à des températures allant de -90 °C à +300 °C.

10. Procédé selon la revendication 9, **caractérisé en ce que** la réaction est réalisée en phase gazeuse, sous forme condensée ou dans un solvant.

11. Composé oligoborosilazane ou polyborosilazane, pouvant être obtenu par la réaction d'un ou plusieurs composés bor-silyl-amine de formule (I) RₓHal₃₋ₓSi-NR¹BR_{y}Hal_{2-y},
dans lequel Hal représente respectivement indépendamment CI,
R représente respectivement indépendamment un résidu d'hydrocarbure avec 1 à 3 atomes de C ou de l'hydrogène,
R¹, R' et R" représentent respectivement indépendamment un résidu d'hydrocarbure avec 1 à 20 atomes de C ou de l'hydrogène,
x est égal à 0, 1 ou 2 et
y est égal à 0 ou 1,
sous réserve que le composé de formule (I) n'est pas le trichlorosilylaminodichloroborane de formule Cl₃Si-NH-BCl₂,
et/ou pouvant être obtenu par réaction d'un composé borosilazane selon la revendication 4 ou 5 avec un composé amine de formule R'R"NH,
**caractérisé en ce qu'**il comporte le motif structural Si-N-B.

12. Procédé de préparation d'une céramique de siliciumcarboboronitrure, **caractérisé en ce que** l'on réalise une amonolyse du boryl-silyl-amine selon l'une des revendications 6 à 8 ou pouvant être obtenu selon un procédé selon l'une des revendications 1 à 3 ou des composés borosilazane selon l'une des revendications 4 ou 5 avec de l'ammoniac à des températures comprises entre -200 °C et +1 400 °C et que le produit intermédiaire formé est calciné dans une atmosphère inerte et/ou de l'ammoniac à des températures comprises entre 800 °C et 1 400 °C.

13. Procédé selon la revendication 12, **caractérisé en ce qu'**une poudre de céramique de siliciumcarboboronitrure amorphe est produite.

14. Procédé de préparation d'un matériau céramique, **caractérisé en ce que** les composés oligoborosilazane ou polyborosilazane selon la revendication 11 sont pyrolysés dans une atmosphère inerte ou contenant de l'ammoniac à des températures allant de 800 °C à 1 800 °C.
